# FASCICULE DE BREVET EUROPEEN

(11) **EP 1 352 808 B1**
(45) Date de publication et mention de la délivrance du brevet: **02.08.2006**
(21) Numéro de dépôt: 03370012.1
(22) Date de dépôt: 26.03.2003
(51) Int. Cl.: B62D 13/02, B62D 13/04

(54) **Véhicule comportant au moins un organe tracteur et au moins un organe tracté**
Fahrzeug mit mindestens einem Zugmittel und mindestens einem Anhänger
Vehicle with at least one tractor and at least one trailer

(30) Priorité: 26.03.2002 FR 0203755
(43) Date de publication de la demande: 15.10.2003
(73) Titulaire: Durieux, Michel, 59600 Maubeuge (FR)
(72) Inventeur: Durieux, Michel, 59600 Maubeuge (FR)
(74) Mandataire: Duthoit, Michel Georges André

(56) Documents cités:
- US-A- 1 416 613
- US-A- 2 987 324

## Description

L'invention est relative à un véhicule comportant au moins un organe tracteur et au moins deux organes tractés.

Elle trouvera notamment son application dans tous les domaines, qu'il s'agisse de véhicules automobiles ou de véhicules à traction animale, auxquels est attelée une remorque, voire un train de remorques, à train de roulement ou de glissement, circulant sur une voie dépourvue de guidage.

En particulier, elle trouvera son application dans le cas de véhicules équipés de remorques bagagères ou de caravanes. La présente invention s'appliquera également dans le cadre des véhicules industriels à semi-remorque ou remorque de tout type, y compris aux trains de remorques assurant les manutentions sur voies privatives. Une autre application pourra concerner les transports en commun, et en particulier les autobus à remorque articulée, ainsi que les trains de bus qui circulent sur des voies sans rail de guidage.

D'autres applications de la présente invention pourront concerner le domaine des engins de travaux publics et des engins de chantier, pour lesquels on utilise des remorques éventuellement à roues propulsives attelées ou raccordées par des articulations à des machines ou camions tracteurs. D'autres applications de la présente invention pourront également concerner le domaine agricole, dans lequel on attèle différentes remorques ou machines agricoles à un tracteur.

Pour tous les cas d'applications, qu'elles soient professionnelles ou de loisirs, la présente invention concerne les remorques uniques aussi bien que les véhicules attelés en rames ainsi que les trains de remorques fonctionnant en navette.

Bien naturellement, les véhicules hippomobiles pour les loisirs ou les transports, pour peu qu'ils comportent deux essieux, l'un assimilé à l'organe tracteur et le ou les autres assimilés à l'organe tracté, trouveront également à appliquer l'invention.

Autrement dit, d'une façon générale, la présente invention est applicable à toute remorque ou engin mobile sur roues, ou assimilées, quels qu'en soient la taille et l'usage, pour autant que le véhicule puisse être équipé d'un dispositif de direction des pivots de roues ou d'essieux ou assimilés.

Cela étant, dans la majorité des cas, les véhicules comportant au moins un organe tracteur et au moins un organe tracté, réunis successivement par un attelage sont généralement commandés en direction par l'effet du train avant de l'organe tracteur. Bien que satisfaisant dans certains cas, il n'est pas rare de constater des accidents de circulation engendrés par de tels véhicules à direction difficile. En outre, la configuration de certaines routes, étroites ou de rayons de courbure serrés, empêche l'accès de ces véhicules, car ils leur est impossible d'y circuler.

Pour prendre l'exemple d'une voiture équipée d'une caravane à essieu fixe, lorsque le véhicule tracteur suit une certaine trajectoire lors du braquage, la remorque présente un rayon de braquage engendré différent, qui augmente la largeur nécessaire de la voie de circulation. Par exemple, pour un rayon de braquage extérieur de près de 9 m, le rayon de braquage intérieur de la remorque est de l'ordre de 5 m, ce qui nécessite une largeur de voie nécessaire d'environ 4 m pour un véhicule d'environ 2 m de large.

Pour les poids lourds, le phénomène est accentué, et par exemple pour un semi-remorque de 30 tonnes d'une largeur d'environ 2,50 m, il faut une largeur de voie d'environ 9 m pour un rayon de braquage extérieur d'environ 20 m.

Bien naturellement, ce raisonnement s'applique également aux bus articulés ou même aux tracteurs avec remorques agricoles.

Pour pallier ces inconvénients, notamment dans le domaine agricole, il est connu de réaliser des remorques agricoles à plusieurs essieux, à roues « flottantes », c'est-à-dire libres en direction. Cependant, de tels dispositifs sont limités à la marche avant sur route à vitesse réduite, et le seul essieu qui reste guide, supporte l'essentiel des efforts latéraux dont la force centrifuge.

De telles réalisations n'apportent que peu d'avantages concernant la maniabilité, et nuisent à la stabilité latérale et doivent être le plus souvent inhibées en marche arrière.

On connaît également, dans le domaine du bâtiment et des travaux publics, voire également dans le domaine agricole, des engins dont tous leurs essieux sont indépendants et directeurs. De tels engins sont limités en vitesse car ils nécessitent une grande dextérité de pilotage. De plus, la nécessité de réalisation d'essieux directeurs indépendants augmente nécessairement le coût de revient.

On connaît du document US-1.416.613 un véhicule comportant au moins un organe tracteur et au moins deux organes tractés, présentant chacun un axe longitudinal, et équipés chacun d'au moins deux trains de sustentation orientables.

Les organes tracteurs et/ou tractés sont réunis successivement par un attelage présentant un axe longitudinal.

Chaque organe tracté comporte des moyens directeurs uniques de guidage pour commander simultanément l'orientation du train de sustentation dit avant, en fonction de l'angle formé entre, d'une part, l'axe longitudinal de l'attelage précédent ledit organe tracté, et d'autre part, l'axe longitudinal de l'organe tracté consécutif audit attelage.

Les trains de sustentation avant et arrière sont commandés, assujettis angulairement en opposition, par l'intermédiaire d'une chaîne croisée engageant respectivement avec deux roues dentées assujetties à chacun des trains de sustentation.

On connaît du document US-776.994, considéré comme l'art antérieure le plus proche, dont les caractéristiques sont reprises dans le préambule de la revendication 1, une rame de wagon, deux wagons successifs étant réunis par une barre d'attelage articulée à chacune de ses extrémités.

Les wagons intermédiaires sont équipés de deux trains de sustentation orientables. Chacun de trains de sustentation présente deux éléments tampon s'étendant horizontalement de part et d'autre de ladite barre d'attelage.

Ces éléments tampon autorisent un débattement angulaire limité de la barre d'attelage par rapport au train de sustentation. Les deux éléments tampon sont munis de lames ressort dont les extrémités libres viennent en appui latéralement des deux côtés de la barre d'attelage.

En outre, les trains de sustentation avant et arrière sont assujettis entre eux par des moyens de rappel élastiques, notamment constitués par un élément intermédiaire et du ressort de traction.

Toutefois, la maniabilité et le comportement dynamique de tels véhicules sont limités.

Le but de la présente invention est de proposer un véhicule, comportant au moins un organe tracteur et au moins deux organes tractés réunis successivement au moyen d'un attelage, qui permet de pallier les inconvénients des systèmes connus et améliore la trajectoire en réduisant l'encombrement en terme de largeur de voie en courbe. En particulier, selon la présente invention, l'organe tracté va suivre sensiblement la même trajectoire que l'organe tracteur qui le précède, ce qui permettra en outre une meilleure précision de guidage.

Par ailleurs, pour les manoeuvres, cela facilitera en utilisant une largeur de voie bien plus réduite, les roulages en marche arrière et permettra à plusieurs remorques assemblées en train de pouvoir réaliser des marches arrière ainsi qu'aux ensembles de véhicules de pouvoir fonctionner en navette lorsqu'ils sont équipés d'un poste de conduite à chaque extrémité.

Un autre but de la présente invention est de proposer un tel véhicule qui soit indépendant du mode de traction et/ou propulsion, qu'il s'agisse d'une traction humaine, animale, ou par n'importe quel type de motorisation mécanique.

En outre, un avantage de la présente invention est d'apporter une amélioration significative dans le domaine de la maniabilité. Le véhicule de la présente invention sera également particulièrement avantageux sur le plan économique et sur le plan de la sécurité.

Par ailleurs, comme dit précédemment, la présente invention trouvera son application dans de très nombreux domaines, qu'il s'agisse de véhicules sur roues à remorque attelée ou semi-portée, quels que soient le nombre d'essieux des organes tracteurs ainsi que celui des organes tractés eux-mêmes, ou éventuellement à remorques attelées en rame, le tout en fonctionnement sécurisé, sans intervention externe de pilotage autre que le conducteur qui dirige l'essieu de tête, en marche avant, en arrière, et en navette.

Ainsi, un autre but de l'invention est de proposer un tel véhicule, comprenant au moins un organe tracteur et au moins deux organes tractés, qui puisse fonctionner indifféremment dans les deux sens de marche ou encore en navette.

D'autres buts et avantages de la présente invention apparaîtront au cours de la description qui va suivre, accompagnée des dessins, qui n'a pas pour but de la limiter.

Selon l'invention, le véhicule, comportant au moins un organe tracteur et au moins deux organes tractés, chaque dit organe tracté présentant un axe longitudinal et étant équipé d'au moins un train de sustentation, ainsi que de moyens directeurs de guidage des trains de sustentation, lesdits organes tracteurs et/ou tractés étant réunis successivement par un attelage, chaque dit attelage présentant un axe longitudinal, et dans lequel :
- chaque dit organe tracté comporte des premiers moyens directeurs de guidage pour commander l'orientation d'au moins undit train de sustentation de l'organe tracté correspondant en fonction de l'angle formé entre d'une part l'axe longitudinal de l'attelage précédent ledit organe tracté et d'autre part l'axe longitudinal de l'organe tracté consécutif audit attelage, et
- chaque organe tracté dit intermédiaire comporte des seconds moyens directeurs de guidage pour commander l'orientation d'au moins un second train de sustentation de l'organe tracté intermédiaire correspondant en fonction de l'angle formé entre d'une part l'axe longitudinal de l'organe tracté intermédiaire, précédent l'attelage dit consécutif et d'autre part l'axe longitudinal dudit attelage consécutif, caractérisé en ce que le véhicule présente au moins un organe tracté intermédiaire équipé de deux trains de sustentation dénommés train avant et train arrière, dans lequel véhicule lesdits premiers moyens directeurs de guidage commandent l'orientation dudit train avant de l'organe tracté intermédiaire correspondant selon un angle αᵢ / 2 égal, ou sensiblement égal à la moitié de l'angle αᵢ formé entre l'axe longitudinal de l'attelage précédent ledit organe tracté intermédiaire correspondant et celui de ce dernier, et lesdits seconds moyens directeurs de guidage commandent l'orientation dudit train arrière de l'organe tracté intermédiaire correspondant selon un angle αⱼ /2 égal, ou sensiblement égal, à la moitié de l'angle αⱼ formé entre l'axe longitudinal de l'organe tracté intermédiaire correspondant, et celui de l'attelage consécutif à ce dernier.

Cela étant, la présente invention sera mieux comprise à la lecture de la description suivante accompagnée des dessins qui font partie intégrante de la présente demande, et en particulier :
- la figure 1 montre schématiquement une variante de réalisation du véhicule de la présente invention présentant un organe tracteur auquel sont attelés successivement deux organes tractés à double train de sustentation,
- la figure 2 montre une variante de réalisation du véhicule, illustré à la figure 1, dans lequel le dernier organe tracté ne présente qu'un seul train de sustentation,

L'invention concerne un véhicule comportant au moins un organe tracteur et au moins deux organes tractés.

Par organe tracteur, on entend tout dispositif à traction humaine, animale, ou mécanique, peu importe le mode de traction et/ou de propulsion du véhicule.

De même, par organe tracté, on entend tout élément de remorque ou semi-remorque, unitaire ou attelé en rame, peu importe leur mode de sustentation et leur destination finale.

C'est ainsi que le véhicule de la présente invention pourra s'appliquer au transport de marchandises, au transport routier, aux transports en commun, aux transports touristiques, aux véhicules de loisirs et par ailleurs à tout domaine agricole.

De même, la présente invention s'appliquera à des véhicules équipés de tout type de train de sustentation, qu'il s'agisse par exemple de train de roulement ou de train de glissement, auquel on pourra adapter les techniques connues de direction, voire de suspension.

Le véhicule de la présente invention comporte au moins un organe tracteur et au moins deux organes tractés réunis successivement au moyen d'un attelage.

Chaque organe tracteur, organe tracté et attelage, présente respectivement un axe longitudinal.

En outre, ledit organe tracté peut être équipé d'au moins deux trains de roulement.

Selon la présente invention, chaque dit organe tracté comporte des premiers moyens directeurs de guidage pour commander l'orientation d'au moins undit train de sustentation de l'organe tracté correspondant, en fonction de l'angle formé entre d'une part l'axe longitudinal de l'attelage, précédent ledit organe tracté, et d'autre part, l'axe longitudinal de l'organe tracté, consécutif audit attelage.

En ce qui concerne la réalisation matérielle des trains de roulement de l'organe tracté, elle sera effectuée selon des techniques connues de l'homme du métier, en utilisant par exemple un pivot d'orientation des essieux permettant donc le pilotage de chaque essieu.

Par ailleurs, en ce qui concerne l'attelage, il sera réalisé également selon des techniques traditionnelles connues de l'homme du métier, avec une articulation à l'arrière de l'organe tracteur et une articulation à l'avant de l'organe tracté et, le cas échéant une articulation à l'arrière de l'organe tracté dit intermédiaire.

Cela étant, selon la présente invention, le véhicule comporte au moins deux organes tractés, lesdits organes tracteur et/ou tractés étant réunis successivement par un attelage, définissant ainsi un organe tracté dit intermédiaire, notamment entre l'organe tracteur et le dernier organe tracté.

En outre, chaque organe tracté dit intermédiaire comporte, selon l'invention, des seconds moyens directeurs de guidage pour commander orientation d'au moins undit train de sustentation de l'organe tracté intermédiaire correspondant en fonction de l'angle formé entre d'une part l'axe longitudinal de l'organe tracté intermédiaire, précédent l'attelage dit consécutif, et d'autre part, l'axe longitudinal dudit attelage consécutif.

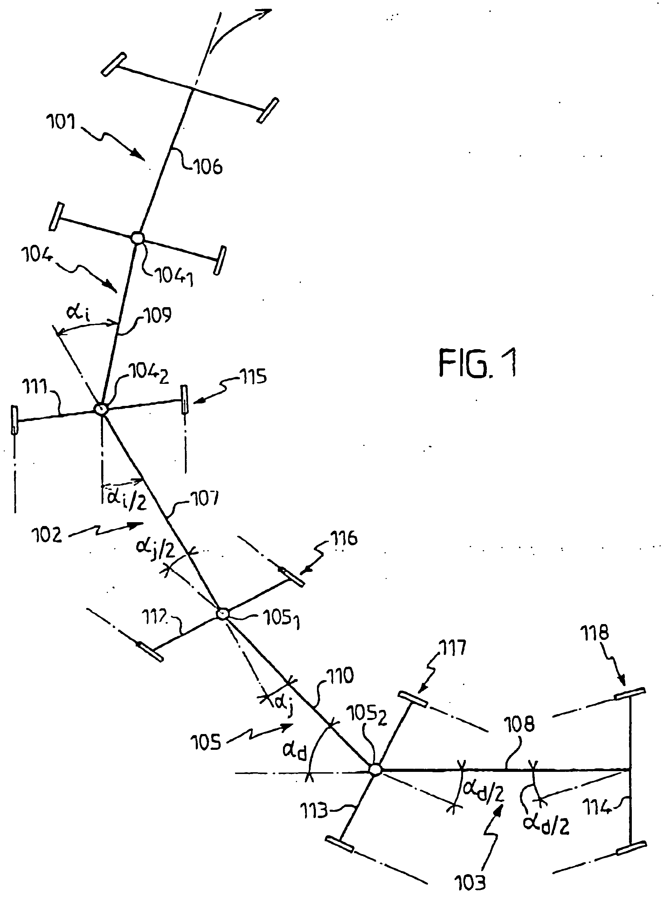

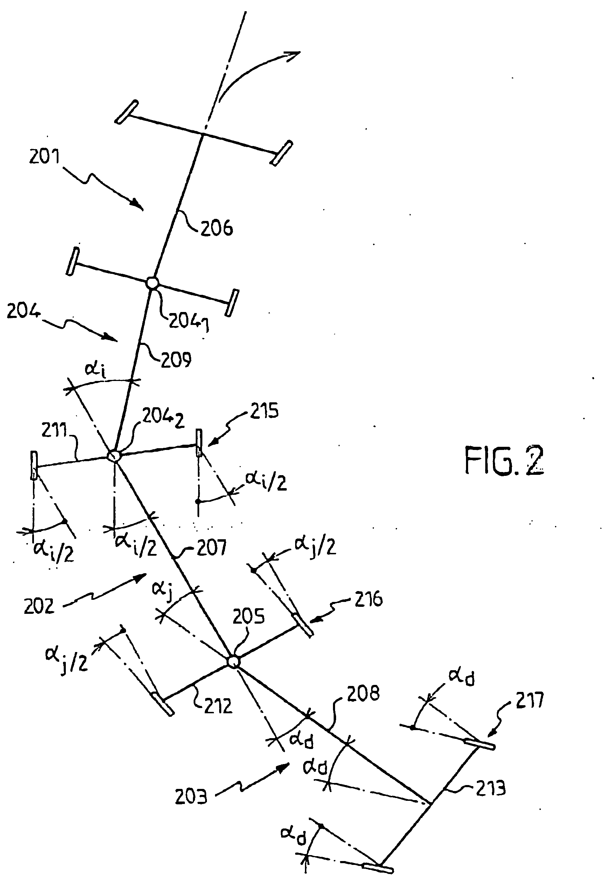

Cela est particulièrement illustré aux figures 1 et 2 qui montrent deux variantes de véhicules équipés chacun de deux organes tractés.

Selon la figure 1, le véhicule de la présente invention comporte un organe tracteur 101, un premier organe tracté 102, dénommé organe tracté intermédiaire, et un troisième organe tracté 103, dénommé dernier organe tracté.

Chaque organe tracteur ou tracté 101, 102, 103, présente respectivement un axe longitudinal repéré 106, 107, 108.

Par ailleurs, lesdits organes tracteur 101 et/ou tractés 102, 103 sont réunis successivement par un attelage 104, 105 qui, pour sa part, présente également un axe longitudinal, repéré respectivement 109, 110.

Dans ce cas, l'organe tracté intermédiaire 102 est équipé de deux trains de sustentation 111, 112, dénommés respectivement train avant 111 et train arrière 112. De même, le dernier organe tracté 103 est équipé de deux trains de sustentation, repérés 113 et 114, dénommés respectivement train avant 113 et train arrière 114.

Comme évoqué ci-dessus, ledit organe tracté intermédiaire 102 comporte des premiers moyens directeurs de guidage 115 qui commandent l'orientation dudit train avant 111 de l'organe tracté intermédiaire 102 correspondant.

Cette orientation dudit train 111 est effectuée selon un angle αᵢ/2 égal, ou sensiblement égal à la moitié de l'angle αᵢ formé entre l'axe longitudinal 109 de l'attelage 104 précédent ledit organe tracté intermédiaire 102 correspondant, et l'axe longitudinal 107 dudit organe tracté intermédiaire 102.

En outre, comme également évoqué précédemment, le véhicule de la figure 1 présente des seconds moyens directeurs de guidage 116 qui commandent l'orientation dudit train arrière 112 de l'organe tracté intermédiaire 102 correspondant.

Cette orientation, comme le montre précisément la figure 1, est effectuée selon un angle αⱼ / 2 égal, ou sensiblement égal, à la moitié de l'angle αⱼ formé entre l'axe longitudinal 107 de l'organe tracté intermédiaire correspondant 102, et celui 110 de l'attelage tracté 105 consécutif à ce dernier 102.

Le véhicule de la présente invention, représenté à la figure 1, comporte en outre un dernier organe tracté 103 présentant deux trains de sustentation 113, 114.

Ledit dernier organe tracté 103 comporte desdits moyens directeurs 117, 118 pour commander l'orientation respective des deux trains de sustentation 113, 114 de l'organe tracté correspondant 103 en fonction de l'angle formé α_{d} entre d'une part l'axe longitudinal 110 de l'attelage 105 précédent ledit organe tracté 103 et d'autre part l'axe longitudinal 108 de l'organe tracté 103 consécutif audit attelage 105.

Pus précisément, pour ledit dernier organe tracté 103 de la figure 1, ladite orientation de chacun des deux trains 113, 114 est commandée selon un angle α_{d}/ 2 égal, ou sensiblement égal, à la moitié de l'angle α_{d} formé entre l'axe longitudinal 110 dudit attelage 105 précédent ledit organe tracté 103, et l'axe longitudinal 108 dudit organe tracté 103.

Le fonctionnement en marche arrière est obtenu par désaccouplement des moyens 117 et 118, les moyens 118 doivent alors être pilotés par une commande indépendante motorisée par n'importe quel énergie.

En cas de fonctionnement en navette, ces moyens 118 indépendant sont alors pilotés en tant que moyens de direction principaux. Le véhicule 101 est alors utilisé de la même façon que lorsque l'organe 108 est l'organe de tête.

La figure 2 montre une variante d'un véhicule équipé de plusieurs organes tractés, notamment deux, dans lequel le dernier organe tracté présente un seul train de sustentation.

Par rapport au véhicule de la figure 1, on retrouve le véhicule tracteur, repéré 201 au lieu de 101, présentant un axe longitudinal de 206, ainsi qu'un organe tracté intermédiaire, repéré 202 au lieu de 102, présentant un axe longitudinal 207. L'organe tracté intermédiaire 202 est réuni à l'organe tracteur 201 par un attelage, repéré 204 au lieu de 104, présentant un axe longitudinal 209.

Le fonctionnement dudit organe tracté intermédiaire 202 est identique à celui repéré 102 à la figure 1.

Les premiers moyens directeurs 215 commandent l'orientation du train avant 211 selon un angle αᵢ/2 égal, ou sensiblement égal, à la moitié de αᵢ formé entre l'axe longitudinal 207 de l'organe tracté intermédiaire 202 et l'axe longitudinal 209 de l'attelage précédent 204.

De même, les seconds moyens directeurs 216 commandent l'orientation du train arrière 212 selon un angle αⱼ / 2 égal, ou sensiblement égal à la moitié de l'angle αⱼ formé entre l'axe longitudinal 207 de l'organe tracté intermédiaire correspondant 202 et l'axe longitudinal 208 de l'organe tracté 203 consécutif. Dans ce cas, l'axe de l'attelage est considéré confondu avec l'axe longitudinal 208 du dernier organe tracté 203.

S'agissant de ce dernier organe tracté 203, comme le montre la figure 2, il présente un seul train de sustentation 213 ainsi que desdits premiers moyens directeurs 217, fonctionnant selon le principe décrit en regard de l'organe tracté 202 du véhicule de la figure 2. Dans ce cas, il faut considérer que l'axe longitudinal du dénommé attelage précédent 205 est confondu avec l'axe 207 de l'organe tracté précédent 202, qui joue ici un rôle d'organe tracteur.

Aussi, ladite orientation provoquée, par les moyens directeurs de guidage 217 du train de sustentation 213 dudit dernier organe tracté 203, est commandée selon un angle α_{d} formé entre l'axe longitudinal 207 de l'organe tracté précédent 202, et l'axe longitudinal 208 dudit dernier organe tracté 203. Il est à noter ici, bien naturellement que l'angle αⱼ est égal, ou sensiblement égal, à l'angle α_{d} qui lui est opposé.

Ainsi, si l'on revient aux figures 1 et 2, on peut modélliser le véhicule par une ligne brisée constituée d'une suite de segments : les axes longitudinaux 106-108, 206-208 des organes tracteur 101, 201 et tractés 102, 103, 202, 203 ainsi que les axes longitudinaux 109, 110, 209 des attelages 104, 105, 204.

Deux segments consécutifs forment un angle αᵢ, αⱼ, α_{d}. L'angle d'orientation du train de sustentation associé au point d'intersection de deux segments consécutifs est égal ou sensiblement égal à la moitié de l'angle αᵢ, αⱼ, α_{d} formé entre ces deux segments consécutifs.

En ce qui concerne le dernier train de sustentation 114, 213 du véhicule, lequel n'est pas à l'intersection de deux segments consécutifs, l'angle d'orientation de ce dernier train est égal ou sensiblement égal à :
- α_{d}, lorsque ce dernier train de sustentation 213 est le seul train de sustentation de l'organe tracté associé 203,
- α_{d}/2, lorsque l'organe tracté associé 103 est équipé de deux trains 113, 114 de sustentation et que ce dernier train de sustentation 114 est le train de sustentation arrière dudit organe tracté associé 103.

En conséquence, l'angle d'orientation des trains de sustentation des organes tractés varie d'un train de sustentation à l'autre, en fonction de la trajectoire du véhicule. Deux trains de sustentation d'un même organe tracté n'et donc pas nécessairement le même angle d'orientation.

Par ailleurs, le dernier organe remorqué peut être équipé d'un dispositif de couplage des trains de sustentation avant et arrière dudit dernier organe remorqué, à l'aide d'un dispositif différentiel linéaire ou rotatif par exemple. Ainsi, il suffit de désactiver la commande de direction correspondante pour passer en marche arrière, dans des conditions de vitesse et de tenue de route identique à la marche avant.

Cela étant, comme dit précédemment, selon la présente invention, il n'y a aucune limitation quant à l'organe tracteur principal qui sera notamment avantageusement constitué par un élément automobile. Il est à remarquer qu'il peut y avoir plusieurs éléments automobiles si les forces de traction ou de propulsion le demandent. On remarquera que le fonctionnement sera identique à celui décrit précédemment, un organe tracté pouvant devenir un organe tracteur pour l'organe tracté suivant, et inversement.

Il est à noter à cet égard que l'ensemble des moyens de sustentation se déplace sur une trajectoire dont les rayons de courbure sont sensiblement les mêmes. Cette caractéristique permet de réduire, voire de ne pas nécessiter de moyens de répartition de la puissance motrice de type différentiel.

S'agissant des attelages, là également ils pourront être constitués selon des techniques connues de l'homme de l'art. Dans le cas d'un organe tracté (303) avec un seul train de sustentation, tel est le cas à la figure 2, l'attelage se présentera substantiellement selon une articulation à boule, repérée 205.

Dans les autres cas, l'attelage présentera une double articulation, l'une du côté de l'organe tracteur et l'autre du côté de l'organe tracté, ou encore du côté de l'organe tracté et de l'organe tracté suivant.

Ces deux articulations sont par exemple repérées 105₁, 105₂ à la figure 1, 204₁, 204₂ à la figure 2.

Grâce à la présente invention, on permet de réduire avantageusement la voie nécessaire à un véhicule équipé du dispositif selon la présente invention.

Naturellement, d'autres mises en oeuvre de la présente invention, à la portée de l'homme de l'art, pourraient être envisagées, sans pour autant sortir du cadre de la présente invention.

## Revendications

1. Véhicule, comportant au moins un organe tracteur (101 ; 201) et au moins deux organes tractés (102, 103 ; 202, 203), chaque dit organe tracté (102, 103 ; 202, 203) présentant un axe longitudinal (107, 108 ; 207, 208) et étant équipé d'au moins un train de sustentation (111 - 114 ; 211 - 213), ainsi que de moyens directeurs de guidage des trains de sustentation, lesdits organes tracteurs et/ou tractés étant réunis successivement entre eux par un seul attelage (104, 105 ; 204, 205), chaque dit attelage (104, 105 ; 204, 205) présentant un axe longitudinal (109, 110 ; 209, 207), et dans lequel :
- chaque dit organe tracté (102, 103 ; 202, 203) comporte des premiers moyens directeurs de guidage (115, 117, 118 ; 215, 217) pour commander l'orientation d'au moins undit train de sustentation (111 - 114 ; 211 - 213) de l'organe tracté correspondant (102, 103 ; 202, 203) en fonction de l'angle formé entre d'une part l'axe longitudinal (109, 110; 209, 207) de l'attelage (104, 105 ; 204, 205) précédent ledit organe tracté (102, 103 ; 202, 203), et d'autre part l'axe longitudinal (107, 108 ; 207, 208) de l'organe tracté (102, 103 ; 202, 203), consécutif audit attelage (104, 105 ; 204, 205), et
- chaque organe tracté dit intermédiaire (102 ; 202) comporte des seconds moyens directeurs de guidage (116 ; 216) pour commander l'orientation d'au moins un second train de sustentation (112 ; 212) de l'organe tracté intermédiaire correspondant (102 ; 202) en fonction de l'angle formé entre d'une part l'axe longitudinal (107 ; 207) de l'organe tracté intermédiaire (102, 202), précédent l'attelage (105 ; 205) dit consécutif et d'autre part l'axe longitudinal (110 ; 207) dudit attelage consécutif (105 ; 205), **caractérisé en ce que** le véhicule présente au moins un organe tracté intermédiaire (102 ; 202) équipé de deux trains de sustentation (111, 112 ; 211, 212) dénommés train avant (111 ; 211) et train arrière (112 ; 212), dans lequel véhicule lesdits premiers moyens directeurs de guidage (115 ; 215) commandent l'orientation dudit train avant (111 ; 211) de l'organe tracté intermédiaire correspondant (102 ; 202) selon un premier angle αᵢ / 2 égal, ou sensiblement égal à la moitié de l'angle αᵢ formé entre l'axe longitudinal (109 ; 209) de l'attelage (104 ; 204) précédent ledit organe tracté intermédiaire correspondant (102 ; 202) et celui (107 ; 207) de ce dernier (102 ; 202), et lesdits seconds moyens directeurs de guidage (116 ; 216) commandent l'orientation dudit train arrière (112 ; 212) de l'organe tracté intermédiaire (102 ; 202) correspondant selon un deuxième angle αⱼ / 2 égal, ou sensiblement égal, à la moitié de l'angle αⱼ formé entre l'axe longitudinal (107 ; 207) de l'organe tracté intermédiaire correspondant (102 ; 202), et celui (110 ; 208) de l'attelage (105 ; 205) consécutif à ce dernier (102 ; 202).

2. Véhicule selon la revendication 1, le dernier organe tracté (203) présentant un seul train de sustentation (213), l'axe longitudinal dudit attelage précédent (205) étant confondu avec celui (207) de l'organe tracté précédent (202), dans lequel véhicule ladite orientation du train de sustentation (213) dudit dernier organe tracté (203) est commandée selon un angle α_{d} égal, ou sensiblement égal, à l'angle α_{d} formé entre l'axe longitudinal (207) de l'organe tracté précédent (202), et celui (208) dudit dernier organe tracté (203).

3. Véhicule selon la revendication 1, le dernier organe tracté (103) présentant deux trains de sustentation (113, 114) dans lequel véhicule ladite orientation de chacun des deux trains (113, 114) dudit dernier organe tracté (103) est commandée selon un angle *α*_{d} / 2 égal ou sensiblement égal, à la moitié de l'angle α_{d} formé entre l'axe longitudinal (110) dudit attelage précédent (105) et celui (108) dudit dernier organe tracté (103).

4. Véhicule selon l'une quelconque des revendications 1 à 3, dans lequel l'organe tracteur est un élément automobile.

## Claims

1. A vehicle including at least one towing member (101 ; 201) and at least two towed vehicles (102, 103; 202, 203), each said towed member (102, 103 ; 202, 203) exhibiting a longitudinal axis (107, 108 ; 207, 208) and being fitted with at least one buoyancy train (111 - 114; 211 - 213), as well as drive means for guiding the buoyancy trains, said towing and/or towed members being gathered successively together by a single coupling assembly (104, 105 ; 204, 205), each said coupling assembly (104, 105 ; 204, 205) exhibiting a longitudinal assembly (109, 110 ; 209, 207), and wherein:
- each said towed member (102, 103 ; 202, 203) includes first guiding drive means (115, 117, 118 ; 215, 217) for controlling the orientation of at least one said buoyancy train (111 - 114 ; 211 - 213) of the corresponding towed member (102, 103 ; 202, 203) relative to the angle formed between on the one hand the longitudinal axis (109, 110 ; 209, 207) of the coupling assembly (104, 105 ; 204, 205) preceding said towed member (102, 103 ; 202, 203), and n the other hand the longitudinal axis (107, 108 ; 207, 208) of the towed member (102, 103 ; 202, 203), consecutive to said coupling assembly (104, 105 ; 204, 205), and
- each so-called intermediate towed member (102 ; 202) includes second guiding drive means (116 ; 216) for controlling the orientation of at east one second buoyancy train (112 ; 212) of the corresponding intermediate towed member (102 ; 202) relative to the angle formed between on the one hand the longitudinal axis (107 ; 207) of the intermediate towed member (102, 202), preceding the so-called consecutive coupling assembly (105 ; 205) and on the other hand the longitudinal axis (110 ; 207) of said consecutive coupling assembly (105 ; 205), **characterised in that** the vehicle includes at least one intermediate towed member (102 ; 202) fitted with two buoyancy trains (111, 112 ; 211, 212), called front train (111 ; 211) and rear train (1-12 ; 212), in which vehicle said first guiding drive means (1-15 ; 215) control the orientation of said front train (111 ; 211) of the corresponding intermediate towed member (102 ; 202) along a first angle αⱼ / 2 equal, or substantially equal to half the angle αᵢ formed between the longitudinal axis (109 ; 209) of the coupling assembly (104 ; 204) preceding said corresponding intermediate towed member (102 ; 202) and that (107 ; 207) of the latter (102 ; 202) and said second guiding drive means (116 ; 216) control the orientation of said rear train (112 ; 212) of the corresponding intermediate towed member (102 ; 202) along a second angle αᵢ / 2 equal, or substantially equal to half the angle αᵢ formed between the longitudinal axis (107 ; 207) of the corresponding intermediate towed member (102 ; 202) and that (110 ; 208) of the coupling assembly (105 ; 205) consecutive to the latter (102 ; 202).

2. A vehicle according to claim 1, the latter towed member (203) exhibiting a single buoyancy train (213), the longitudinal axis of said preceding coupling assembly (205) being confused with that (207) of the preceding towed member (202), in which vehicle said orientation of said buoyancy train (213) of said last towed member (203) is controlled along a first angle α_{d} equal, or substantially equal to the angle α_{d} formed between the longitudinal axis (207) of the preceding towed member (202) and that (208) of said last towed member (203).

3. A vehicle according to claim 1, wherein said last towed member (103) exhibits two buoyancy trains (113, 114) in which vehicle said orientation of each of both trains (113, 114) of said last towed member (103) is controlled along a first angle α_{d} / 2 equal, or substantially equal to half the angle α_{d} formed between the longitudinal axis (110) of said preceding towed member (105) and that (108) of said last towed member (103).

4. A vehicle according to any of the claims 1 to 3, wherein the towing member is an automotive element.

## Patentansprüche

1. Fahrzeug, umfassend zumindest ein Ziehorgan (101 ; 201) und zumindest zwei gezogene Organe (102, 103 ; 202, 203), wobei jedes besagte gezogene Organ (102, 103 ; 202, 203) eine Längsachse (107, 108 ; 207, 208) aufweist und mit wenigstens einer Auftriebsachse (111 - 114 ; 211 - 213) sowie mit Führungsmitteln zur Lenkung der Auftriebsachsen ausgestattet ist, wobei die besagten ziehenden und/oder gezogenen Organe aufeinanderfolgend miteinander durch eine einzige Anhängerkupplung (104, 105 ; 204, 205) zusammengekoppelt sind, wobei jede der besagten Anhängerkupplungen (104, 105 ; .204, 205) eine Längsachse (109, 110 ; 209, 207) aufweist, und in dem :
- jedes besagte gezogene Organ (102, 103 ; 202, 203) erste Führungsmittel zur Lenkung (115, 117, 118 ; 215, 217) umfaßt, um die Orientierung von wenigstens einer besagten Auftriebsachse (111 - 114 ; 211 - 213) des entsprechenden gezogenen Organs (102, 103 ; 202, 203) in Abhängigkeit von dem Winkel anzusteuern, der zwischen, einerseits, der Längsachse (109, 110 ; 209, 207) der dem besagten gezogenen Organ (102, 103 ; 202, 203) vorangehenden Anhängerkupplung (104, 105 ; 204, 205), und, andererseits, der Längsachse (107, 108 ; 207, 208) des der besagten Anhängerkupplung (104, 105 ; 204, 205) folgenden gezogenen Organs (102, 103 ; 202, 203), gebildet ist, und
- jedes gezogene, als Zwischenorgan (102 ; 202) bezeichnete Organ zweite Führungsmittel zur Lenkung (116 ; 216) umfaßt, um die Orientierung von wenigstens einer zweiten Auftriebsachse (112 ; 212) des entsprechenden gezogenen Zwischenorgans (102 ; 202) in Abhängigkeit von dem Winkel anzusteuern, der zwischen, einerseits, der Längsachse (107 ; 207) des gezogenen, der als folgend bezeichneten Anhängerkupplung (105 ; 205) vorangehenden Zwischenorgans (102 ; 202), und, andererseits, der Längsachse (110 ; 207) der besagten folgenden Anhängerkupplung (105 ; 205) gebildet ist, **dadurch gekennzeichnet, daß** das Fahrzeug wenigstens ein gezogenes Zwischenorgan (102 ; 202) aufweist, das mit zwei Auftriebsachsen (111, 112 ; 211, 212) ausgestattet ist, die als Vorderachse (111 ; 211) und Hinterachse (112 ; 212) bezeichnet sind, in welchem Fahrzeug die besagten ersten Führungsmittel zur Lenkung (115 ; 215) die Orientierung der besagten Vorderachse (111 ; 211) nach einem ersten Winkel αᵢ/2 ansteuern, der gleich oder im wesentlichen gleich der Hälfte des Winkels αᵢ ist, der zwischen der Längsachse (109 ; 209) der dem besagten entsprechenden gezogenen Zwischenorgan (102 ; 202) vorangehenden Anhängerkupplung (104 ; 204) und jener (107 ; 207) dieses letzteren (102 ; 202) gebildet ist, und die besagten zweiten Führungsmittel zur Lenkung (116 ; 216) die Orientierung der besagten Hinterachse (112 ; 212) des entsprechenden gezogenen Zwischenorgans (102 ; 202) nach einem zweiten Winkel αⱼ/2 ansteuern, der gleich oder im wesentlichen gleich der Hälfte des Winkels αⱼ ist, der zwischen der Längsachse (107; 207) des entsprechenden gezogenen Zwischenorgans (102 ; 202) und jener (110; 200) der diesem letzteren (102 ; 202) folgenden Anhängerkupplung (105 ; 205) gebildet ist.

2. Fahrzeug nach Anspruch 1, in dem das letzte gezogene Organ (203) nur eine einzige Auftriebsachse (213) aufweist, wobei die Längsachse der besagten vorangehenden Anhängerkupplung (205) mit jener (207) des vorangehenden gezogenen Organs (202) zusammenfallend sei, in welchem Fahrzeug die besagte Orientierung der Auftriebsachse (213) des besagten letzten gezogenen Organs (203) nach einem Winkel α_{d} angesteuert ist, der gleich oder im wesentlichen gleich dem Winkel α_{d} ist, der zwischen der Längsachse (207) des vorangehenden gezogenen Organs (202), und jener (208) des besagten letzten gezogenen Organs (203) gebildet ist.

3. Fahrzeug nach Anspruch 1, in dem das letzte gezogene Organ (103) zwei Auftriebsachsen (113, 114) aufweist, in welchem Fahrzeug die besagte Orientierung von jedem der beiden Achsen (113, 114) des besagten letzten gezogenen Organs (103) nach einem Winkel α_{d}/2 angesteuert ist, der gleich oder im wesentlichen gleich der Hälfte des Winkels α_{d} ist, der zwischen der Längsachse (110) der besagten vorangehenden Anhängerkupplung (105) und jener (108) des besagten letzten gezogenen Organs (103) gebildet ist.

4. Fahrzeug nach irgendeinem der Ansprüche 1 bis 3, in dem das Ziehorgan ein Automobilelement ist.
